# EUROPEAN PATENT APPLICATION

(11) **EP 4 113 327 A1**
(43) Date of publication of application: **04.01.2023**
(21) Application number: 20920908.9
(22) Date of filing: 17.08.2020
(51) Int. Cl.: G06F 16/583, G06F 16/587, G06T 7/00

(54) **IMAGE PROCESSING DEVICE AND IMAGE PROCESSING METHOD**

(30) Priority: 27.02.2020 JP 2020032403
(71) Applicant: Panasonic Intellectual Property Management Co., Ltd., Osaka-shi, Osaka 540-6207 (JP)
(72) Inventor: MOCHINAGA, Kazuhiro, Osaka-shi, Osaka 540-6207 (JP); UESAKA, Yasushi, Osaka-shi, Osaka 540-6207 (JP); UEDA, Isao, Osaka-shi, Osaka 540-6207 (JP); SUGIMOTO, Takashi, Osaka-shi, Osaka 540-6207 (JP); HIROTA, Takeshi, Osaka-shi, Osaka 540-6207 (JP)
(74) Representative: Novagraaf International SA
(86) International application number: PCT/JP2020/030981
(87) International publication number: WO 2021/171652

(57) **Abstract**

An image processing device (10) includes an obtainer (11) that obtains a single image and meta information indicating additional information of the image; and an analyzer (12) that performs an analysis of a meaning of the image and the meta information obtained, determines an event shown in the image, using the meaning obtained by the analysis, and outputs event information that identifies the event determined.

## Description

### [Technical Field]

The present disclosure relates to an image processing device and an image processing method. In particular, the disclosure relates to an image processing device and an image processing method for determining an event shown in an image.

### [Background Art]

Various methods have been proposed for classifying images obtained by an imaging device (for example, see patent literature (PTL) 1). In PTL 1, images are classified, using information indicating whether the images were taken at regular time intervals.

### [Citation List]

### [Patent Literature]

[PTL 1] Japanese Patent No. 6631678

### [Summary of Invention]

### [Technical Problem]

However, the method proposed in PTL 1 is a technology for grouping a plurality of images, and thus cannot determine an event captured in a single image.

In view of the above, the present disclosure aims to provide an image processing device and an image processing method capable of determining an event shown in a single image.

### [Solution to Problem]

To achieve the above object, the image processing device according to an aspect of the present disclosure includes: an obtainer that obtains a single image and meta information indicating additional information of the single image; and an analyzer that performs an analysis of a meaning of the single image and the meta information obtained, determines an event shown in the single image, using the meaning obtained by the analysis, and outputs event information that identifies the event determined.

To achieve the above object, the image processing method according to an aspect of the present disclosure includes: obtaining a single image and meta information indicating additional information of the single image; and performing an analysis of a meaning of the single image and the meta information obtained, determining an event shown in the single image, by use of the meaning obtained by the analysis, and outputting event information that identifies the event determined.

### [Advantageous Effects of Invention]

The image processing device and the image processing method according to the present disclosure are effective for determining an event shown in a single image.

### [Brief Description of Drawings]

[FIG. 1A]

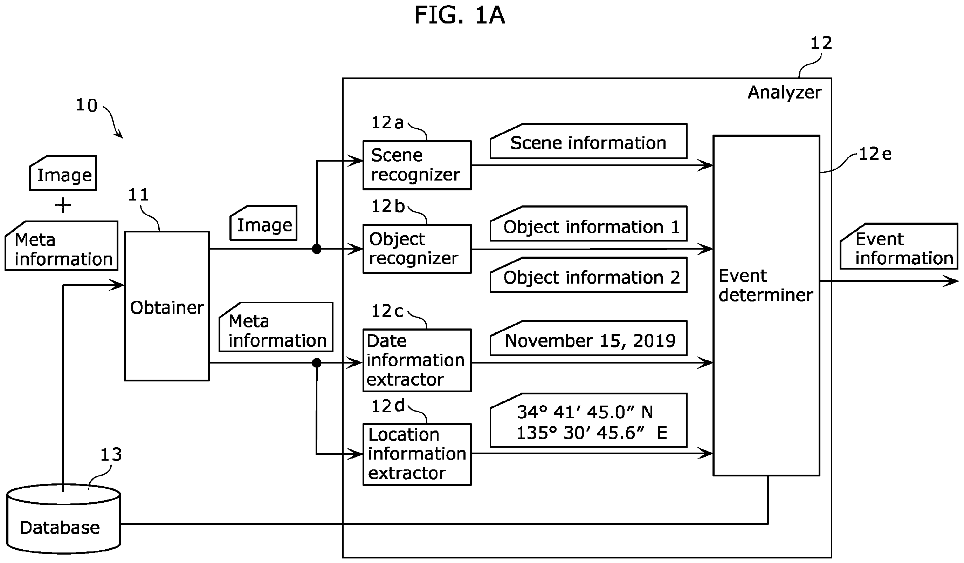

   FIG. 1A is a block diagram showing the configuration of an image processing device according to an embodiment.
[FIG. 1B]

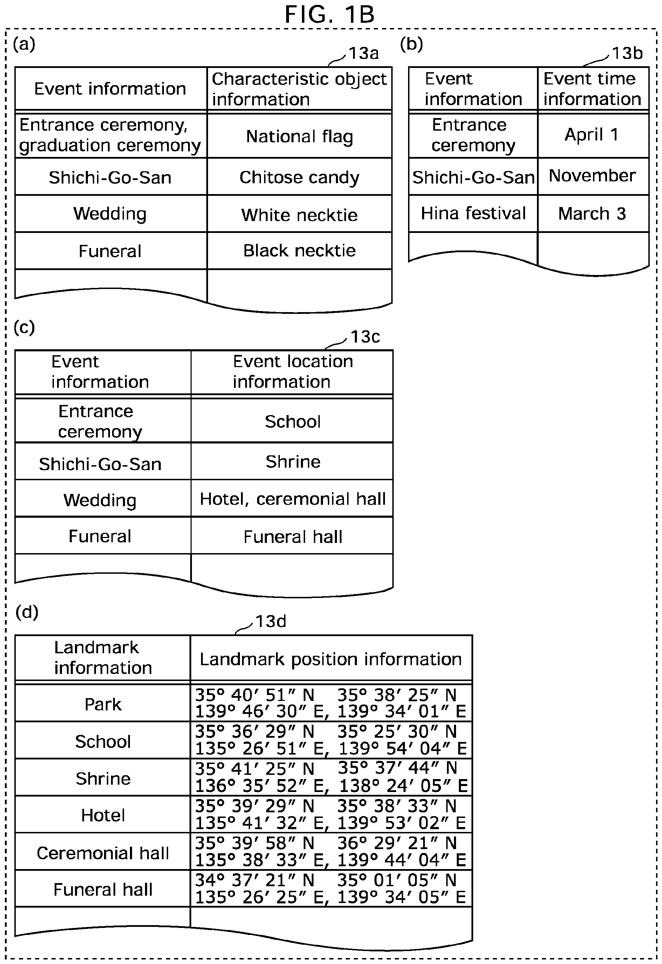

   FIG. 1B is a diagram showing example data stored in a database included in the image processing device according to the embodiment.
[FIG. 2]

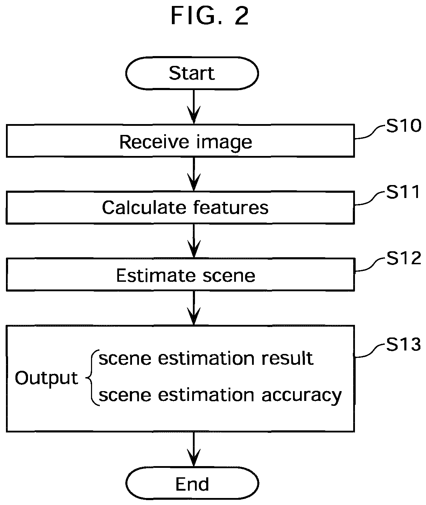

   FIG. 2 is a flowchart of an operation performed by a scene recognizer included in the image processing device according to the embodiment.
[FIG. 3]

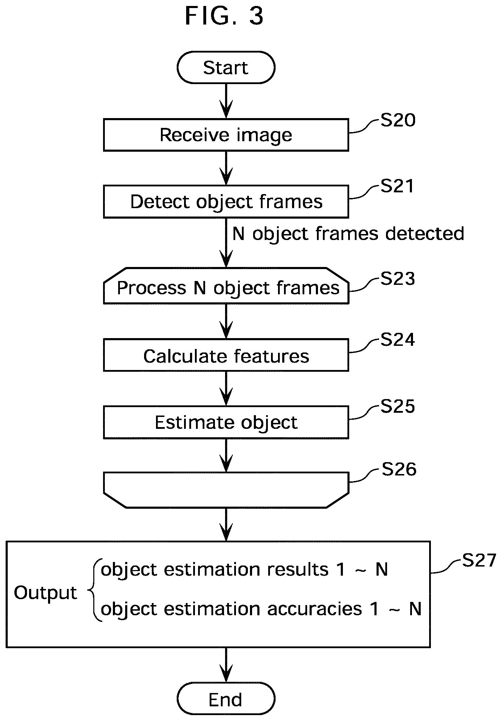

   FIG. 3 is a flowchart of an operation performed by an object recognizer included in the image processing device according to the embodiment.
[FIG. 4]

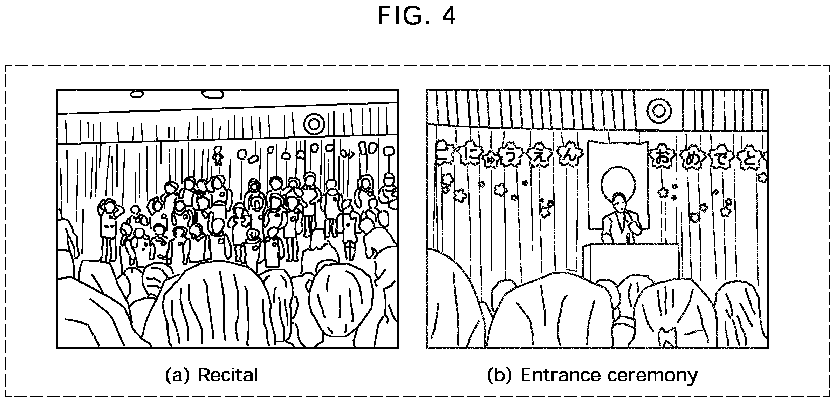

   FIG. 4 is a diagram showing two example images for describing a first example operation performed by an event determiner included in the image processing device according to the embodiment.
[FIG. 5]

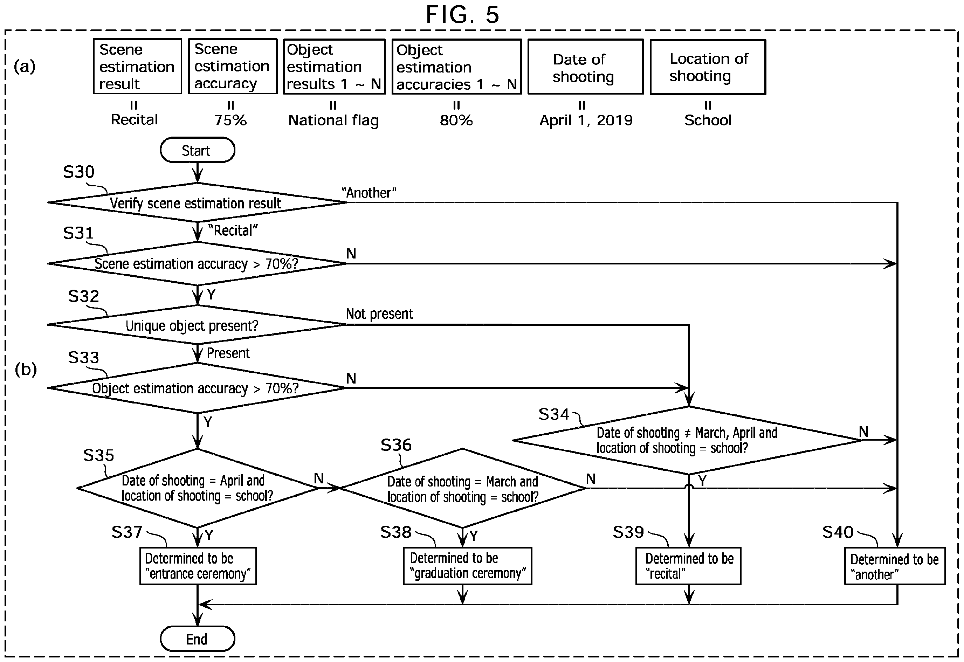

   FIG. 5 is a diagram for describing the first example operation performed by the event determiner included in the image processing device according to the embodiment.
[FIG. 6]

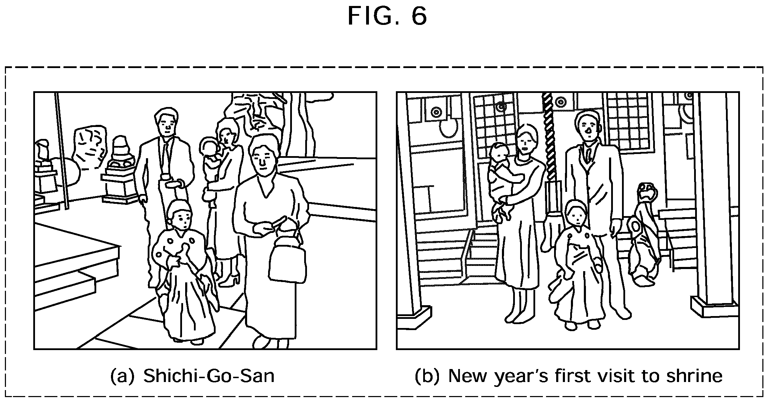

   FIG. 6 is a diagram showing two example images for describing a second example operation performed by the event determiner included in the image processing device according to the embodiment.
[FIG. 7]

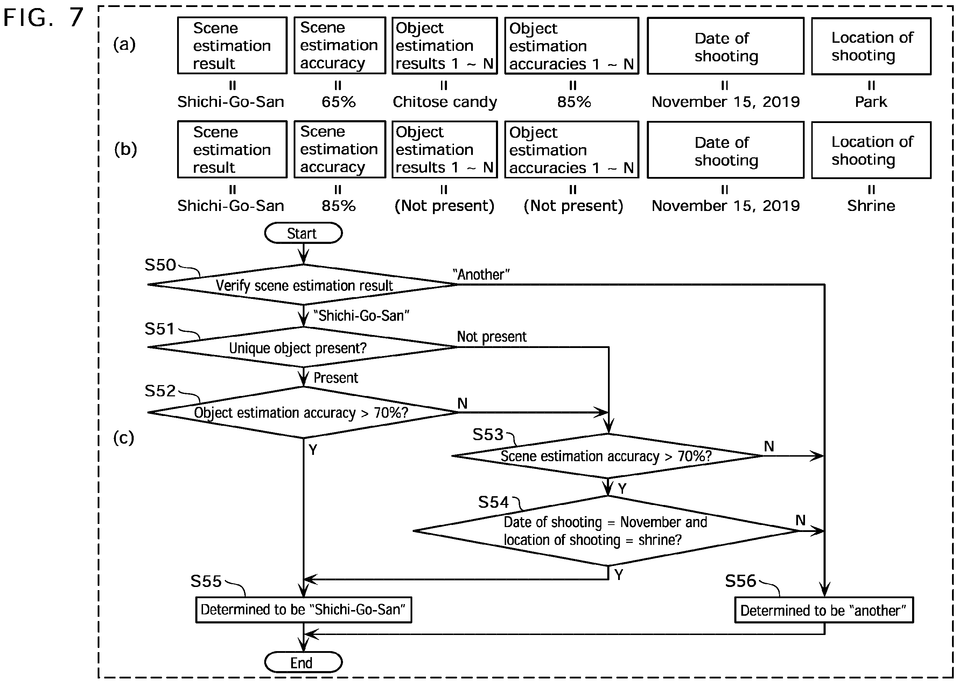

   FIG. 7 is a diagram for describing the second example operation performed by the event determiner included in the image processing device according to the embodiment.
[FIG. 8]

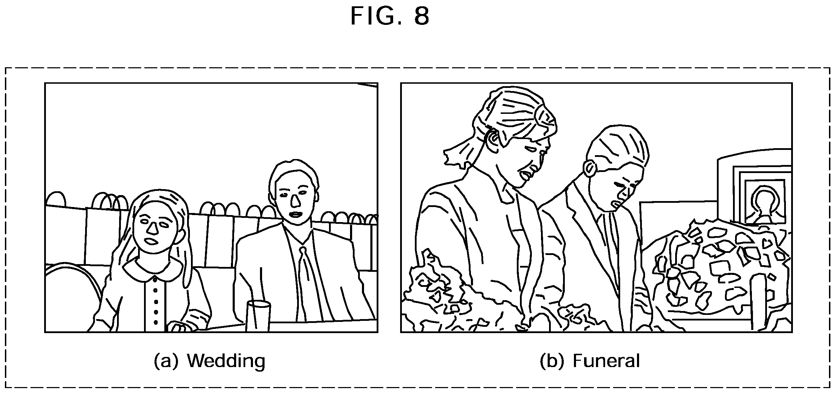

   FIG. 8 is a diagram showing two example images for describing a third example operation performed by the event determiner included in the image processing device according to the embodiment.
[FIG. 9]

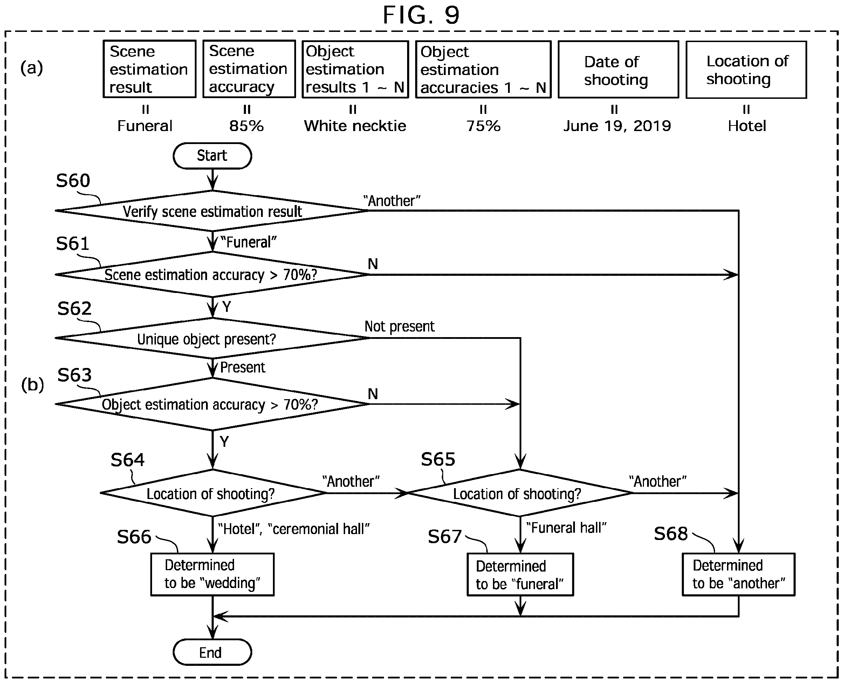

   FIG. 9 is a diagram for describing the third example operation performed by the event determiner included in the image processing device according to the embodiment.
[FIG. 10]

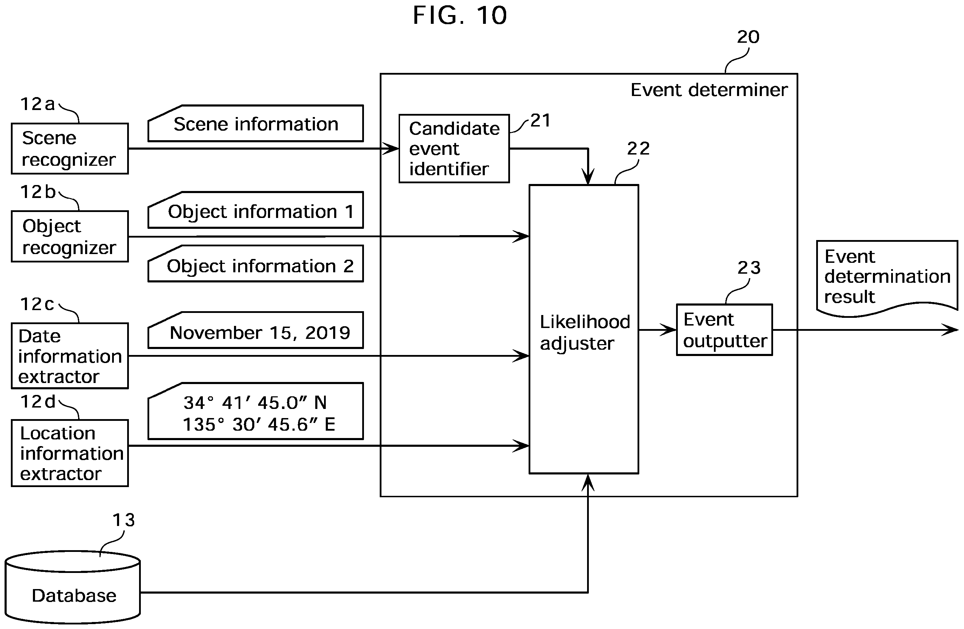

   FIG. 10 is a block diagram showing the configuration of an event determiner included in an image processing device according to a variation of the embodiment.
[FIG. 11]

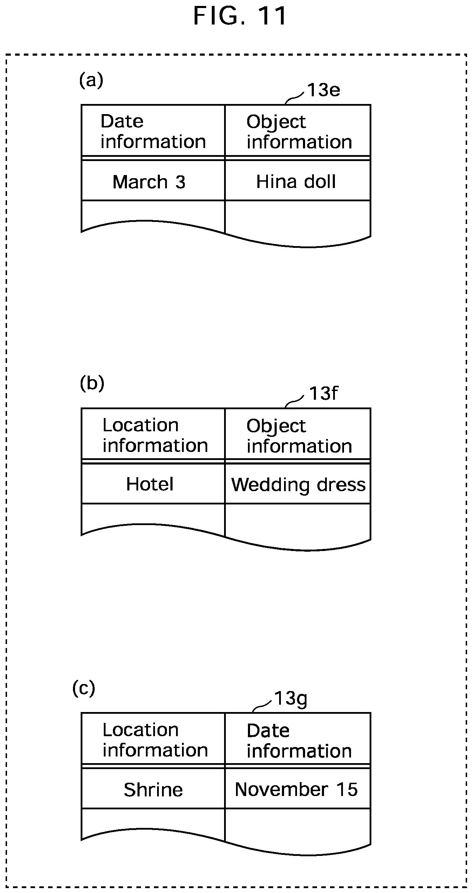

   FIG. 11 is a diagram showing example data stored in the database included in the image processing device according to the variation of the embodiment.
[FIG. 12]

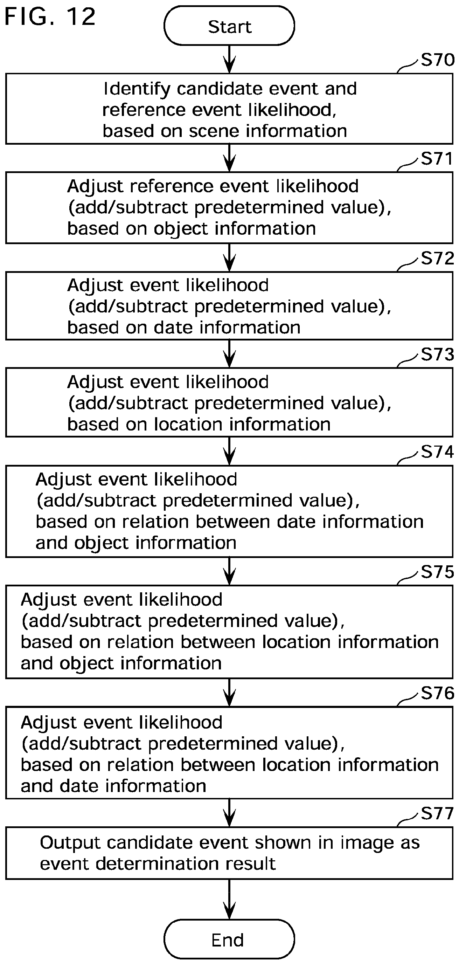

   FIG. 12 is a flowchart of an operation performed by the event determiner included in the image processing device according to the variation of the embodiment.
[FIG. 13]

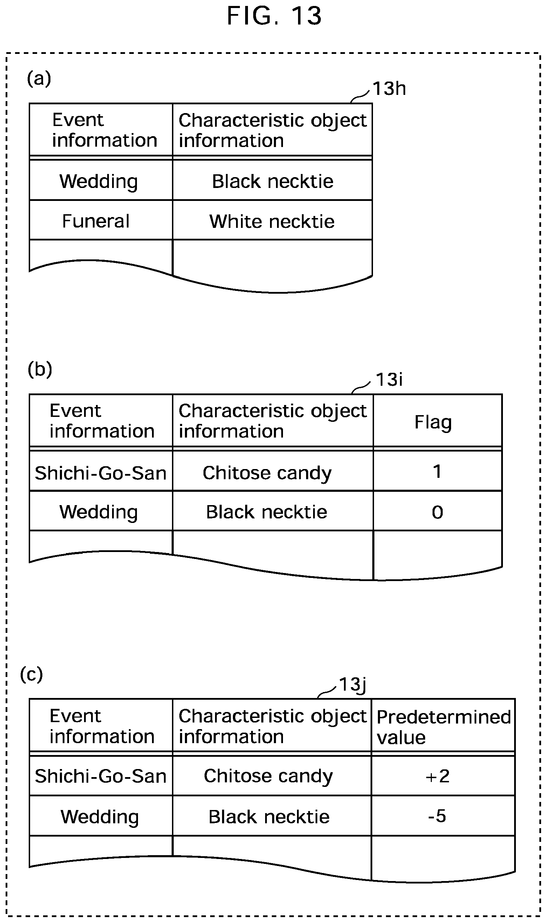

   FIG. 13 is a diagram showing three forms of table indicating correspondence between event information and conflicting characteristic object information according to the variation of the embodiment.

### [Description of Embodiment]

The following describes the embodiment in detail with reference to the drawings where necessary. Note that detailed descriptions more than necessary can be omitted. For example, a detailed description of a well-known matter or an overlapping description of substantially the same configuration can be omitted. This is to prevent the following description from becoming unnecessarily redundant and to facilitate the understanding of those skilled in the art.

Also note that the inventors provide the accompanying drawings and the following description for those skilled in the art to fully understand the present disclosure, and thus that these do not intend to limit the subject recited in the claims.

### [Embodiment]

With reference to FIG. 1A through FIG. 9, the embodiment will be described below.

### [1. Configuration]

FIG. 1A is a block diagram showing the configuration of image processing device 10 according to the embodiment. Image processing device 10, which is a device that determines an event shown in a single image, includes obtainer 11, analyzer 12, and database 13.

Obtainer 11 is a unit that obtains a single image and meta information indicating additional information of the image. Examples of obtainer 11 include a High-Definition Multimedia Interface^{®} (HDMI) and a wired/wireless communications interface, such as a wireless LAN, for obtaining an image and meta information from a camera or database 13. Note that the single image may be an image obtained by shooting or may be computer graphics. Also, the additional information is information that includes at least one of date information indicating the date on which the image is generated or location information indicating the location where the image is generated. For example, the additional information is metadata, compliant with Exif, that represents the date of shooting the image and the location of shooting the image.

Analyzer 12 is a processing unit that analyzes the meaning of the image and the meta information obtained by obtainer 11, determines the event shown in the image, using the meaning obtained by the analysis, and outputs event information that identifies the determined event. Analyzer 12 includes scene recognizer 12a, object recognizer 12b, date information extractor 12c, location information extractor 12d, and event determiner 12e. Analyzer 12 is implemented by, for example, a microcomputer that includes a processor, a program executed by the processor, a memory, and an input/output circuit, etc.

Scene recognizer 12a recognizes the scene shown by the entirety of the image from the image obtained by obtainer 11, and outputs scene information indicating the recognized scene to event determiner 12e. The scene information also serves as event information indicating a candidate event to be eventually determined by image processing device 10. Note that the scene information to be outputted may be two or more items of scene information indicating different scenes.

Object recognizer 12b recognizes an object included in the image from the image obtained by obtainer 11, and outputs object information indicating the recognized object to event determiner 12e.

Date information extractor 12c extracts the date information included in the meta information from the meta information obtained by obtainer 11, and outputs the extracted date information to event determiner 12e. More specifically, date information extractor 12c searches through the meta information for an item name indicating a date such as "date of shooting" by a text string, and extracts information corresponding to such item name as the date information.

Location information extractor 12d extracts the location information included in the meta information from the meta information obtained by obtainer 11, and outputs the extracted location information to event determiner 12e. More specifically, location information extractor 12d searches through the meta information for an item name indicating a location such as "location of shooting" by a text string, and extracts information corresponding to such item name (e.g., the latitude and longitude) as the location information.

Event determiner 12e analyzes the meaning of at least one of the scene information, the object information, the date information, or the location information obtained by at least one of scene recognizer 12a, object recognizer 12b, date information extractor 12c, or location information extractor 12d. Event determiner 12e then determines the event shown in the image obtained by obtainer 11, using the meaning obtained by the analysis, and outputs event information indicating the determined event to an external device (not illustrated) such as a display.

To be more specific, in the analysis of the meaning, event determiner 12e refers to database 13 to analyze the meaning of at least one of the scene information (i.e., candidate event information), the object information, the date information, or the location information. More specifically, event determiner 12e identifies, from database 13, characteristic object information corresponding to the object information obtained by object recognizer 12b, and obtains, as the meaning corresponding to the object information, the event information that is stored in database 13 in correspondence with the identified characteristic object information. Note that the characteristic object information is information indicating a characteristic object used for an event. Event determiner 12e also identifies, from database 13, event time information corresponding to the date information obtained by date information extractor 12c, and obtains, as the meaning corresponding to the date information, the event information that is stored in database 13 in correspondence with the identified event time information. Event determiner 12e further identifies, from database 13, landmark position information corresponding to the location information obtained by location information extractor 12d, and obtains, as the meaning corresponding to the location information, the landmark position information that is stored in database 13 in correspondence with the identified landmark position information.

Database 13 is a storage device that stores a plurality of correspondences between at least one of the scene information, the object information, the date information, or the location information and their respective meanings. Examples of database 13 include storage such as an HDD, and a server device, etc. connected to obtainer 11 and analyzer 12 via a communication such as a communication via the Internet.

FIG. 1B is a diagram showing example data stored in database 13 included in image processing device 10 according to the embodiment. As shown in the diagram, database 13 stores table 13a in which event information indicating various events and characteristic object information indicating characteristic objects used for the respective events are associated with each other (see (a) in FIG. 1B). Database 13 also stores table 13b in which event information indicating various events and event time information indicating the times of year when the respective events are conducted are associated with each other (see (b) in FIG. 1B). Database 13 also stores table 13c in which event information indicating various events and event location information indicating the locations where the respective events are conducted are associated with each other (see (c) in FIG. 1B). Database 13 also stores table 13d in which landmark information indicating various landmarks and landmark position information indicating the positions of the respective landmarks (e.g., the latitude and longitude) are associated with each other (see (d) in FIG. 1B).

Note that database 13 may store a table in which scene information indicating various scenes and event information indicating various events are associated with each other, and event determiner 12e may refer to such table to identify the event information indicating a candidate event from the scene information. Database 13 may also store information, etc. relating to similar events. Note that various items of data and tables stored in database 13 can be edited by an editing tool through interaction with a user.

### [2. Operations]

The following describes operations performed by image processing device 10 with the above configuration. Here, operations of scene recognizer 12a, object recognizer 12b, and event determiner 12e that perform characteristic operations will be described in detail.

### [2-1. Operation of Scene Recognizer]

First, the operation performed by scene recognizer 12a will be described.

FIG. 2 is a flowchart of an operation performed by scene recognizer 12a included in image processing device 10 according to the embodiment.

First, scene recognizer 12a receives a single image from obtainer 11 (S10).

Subsequently, scene recognizer 12a calculates features of the received image (S11). More specifically, scene recognizer 12a performs, on the image, edge detection, filtering processes, and an analysis of the luminance and color distribution, etc. Through these processes, scene recognizer 12a calculates, as a plurality of features, information on edges and corners that form the contour of the image, information on the luminance and color distribution of the image, and so forth. Alternatively, scene recognizer 12a uses a trained convolutional neural network to calculate a plurality of features from the image.

Subsequently, scene recognizer 12a estimates a scene shown by the entirety of the image, using the plurality of features calculated in step S11 (S12). More specifically, scene recognizer 12a refers to an internally stored table in which scenes and regions in a space constituted by the plurality of features are associated with each other. Scene recognizer 12a then identifies, as an estimation result, a scene corresponding to the region to which a point in the space corresponding to the plurality of features calculated in step S11 belongs and calculates, as an estimation accuracy, the distance between the point and the center of the region. Alternatively, scene recognizer 12a uses a trained convolutional neural network to identify, from the plurality of features calculated in step S11, the most probable scene as an estimation result, and identifies its probability as an estimation accuracy. Note that a single pair or a plurality of pairs of a scene to be estimated and an estimation accuracy may be present.

Finally, scene recognizer 12a outputs, to event determiner 12e, the scene ("scene estimation result") estimated in step S12 and the estimation accuracy ("scene estimation accuracy") (S13).

Through the above processes, scene recognizer 12a recognizes the scene shown by the entirety of the image from the single image obtained by obtainer 11.

Note that scene recognizer 12a may collectively perform the processes of the foregoing steps S11 and S12, using one trained convolutional neural network in which an image received from obtainer 11 serves as an input and the probability of the image showing each of a plurality of scenes as an output.

### [2-2. Operation of Object Recognizer]

Next, the operation performed by object recognizer 12b will be described.

FIG. 3 is a flowchart of an operation performed by object recognizer 12b included in image processing device 10 according to the embodiment.

First, object recognizer 12b receives the single image from obtainer 11 (S20).

Subsequently, object recognizer 12b detects an object frame in the received image (S21). More specifically, object recognizer 12b extracts a contour in the image, thereby detecting the object frame. Suppose that N object frames are detected here, where N is 0 or a natural number.

Object recognizer 12b then calculates features (S24) and estimates an object (S25) for each of the N object frames detected in step S21 (S23 through S26). To be more specific, in the calculation of features (S24), object recognizer 12b calculates features in an image enclosed by each object frame. More specifically, object recognizer 12b performs, on the image enclosed by each object frame, edge detection, filtering processes, and an analysis of the luminance and color distribution, etc. Through these processes, object recognizer 12b calculates, as a plurality of features, information on edges and corners that form the contour of the image, information on the luminance and color distribution of the image, and so forth. Alternatively, object recognizer 12b uses a trained convolutional neural network to calculate a plurality of features from the image enclosed by each object frame.

In the estimation of an object (S25), object recognizer 12b estimates an object shown in the image enclosed by each object frame, using a plurality of features calculated in step S24. More specifically, object recognizer 12b refers to an internally stored table in which objects and regions in a space constituted by a plurality of features are associated with each other. Object recognizer 12b then identifies, as an estimation result, an object corresponding to the region to which a point in the space corresponding to the plurality of features calculated in step S24 belongs and calculates, as an estimation accuracy, the distance between the point and the center of the region. Alternatively, object recognizer 12b uses a trained convolutional neural network to identify, as an estimation result, the most probable object from the plurality of features calculated in step S24 and identifies, as an estimation accuracy, its probability. Note that a single pair or a plurality of pairs of an object to be estimated and an estimation accuracy may be present for a single object frame.

Finally, object recognizer 12b outputs, to event determiner 12e, the objects ("object estimation results 1 through N") and estimation accuracies ("object estimation accuracies 1 through N") estimated in step S23 through S26 (S27).

Through the above processes, object recognizer 12b recognizes the objects included in the single image obtained by obtainer 11.

### [2-3. Operation of Event determiner]

The following describes the operation performed by event determiner 12e, using concrete example images.

### [2-3-1. First Example Operation]

FIG. 4 is a diagram showing two example images for describing a first example operation performed by event determiner 12e included in image processing device 10 according to the embodiment. More specifically, (a) in FIG. 4 shows an example image taken at the event "recital" conducted at school, and (b) in FIG. 4 shows an example image taken at the event "entrance ceremony" conducted at school. Note that the first example operation is an example operation, performed by image processing device 10, that focuses on the case where the scene estimation result obtained by scene recognizer 12a is "recital".

FIG. 5 is a diagram for describing the first example operation performed by event determiner 12e included in image processing device 10 according to the embodiment. More specifically, (a) in FIG. 5 shows an example of input data to event determiner 12e and (b) in FIG. 5 shows a flowchart of the first example operation performed by event determiner 12e.

As is known from the two example images shown in FIG. 4, both of these images show similar school events. In the present example operation, event determiner 12e distinctively identifies these similar events. The processing procedure for this will be described below.

First, as shown in the flowchart of (b) in FIG. 5, event determiner 12e verifies the scene estimation result outputted from scene recognizer 12a (S30). When verifying that the scene estimation result is not "recital" ("another" in S30), event determiner 12e determines that the target single image shows "another" event excluding "recital" (S40).

Meanwhile, when verifying that the scene estimation result is "recital" ("recital" in S30), event determiner 12e then determines the scene estimation accuracy outputted from scene recognizer 12a (S31). When determining that scene estimation accuracy is below "70%" (N in S31), event determiner 12e determines that the target single image shows "another" event excluding "recital" (S40).

Meanwhile, when determining that the scene estimation accuracy is above "70%" (Y in S31), event determiner 12e then determines whether an object unique to the event is present in the object estimation results outputted from object recognizer 12b (S32). More specifically, event determiner 12e refers to table 13a in which the event information indicating various events and the characteristic object information indicating characteristic objects used for the respective events are associated with each other. Through this, event determiner 12e determines whether database 13 stores the characteristic object information corresponding to the object information obtained by object recognizer 12b.

When determining that no object unique to the event is present (Not present in S32), event determiner 12e determines whether the date information (here, the date of shooting) outputted from date information extractor 12c indicates "March" or "April" and the location information (here, the location of shooting) outputted from location information extractor 12d indicates "school" to verify again whether the scene estimation result "recital" has the possibility of being the final determination result (event) (S34). More specifically, event determiner 12e refers to table 13b, stored in database 13, in which the event information indicating various events and the event time information indicating the times of year when the respective events are conducted are associated with each other and table 13c, stored in database 13, in which the event information indicating various events and the event location information indicating the locations where the respective events are conducted are associated with each other. Through this, event determiner 12e recognizes that "graduation ceremony" and "entrance ceremony" that are events similar to "recital" are both conducted at "school" in "March" and "April", respectively. On the basis of this, event determiner 12e determines whether the date information (here, the date of shooting) outputted from date information extractor 12c indicates "March" or "April" and the location information (here, the location of shooting) outputted from location information extractor 12d indicates "school".

When determining that the date information outputted from date information extractor 12c indicates neither "March" nor "April" and the location information outputted from location information extractor 12d indicates "school" (Y in S34), event determiner 12e determines that the target single image shows neither "graduation ceremony" nor "entrance ceremony" but the event "recital" (S39). In the other case (N in S34), event determiner 12e determines that the target single image shows "another" event excluding "recital" (S40).

Meanwhile, in the determining of whether an object unique to the event is present (S32), when determining that an object unique to the event is present (Present in S32), event determiner 12e then determines the object estimation accuracy outputted from object recognizer 12b (S33). When determining that the object estimation accuracy is below "70%" (N in S33), event determiner 12e performs the process of step S34 and the subsequent processes described above to verify again whether the scene estimation result "recital" has the possibility of being the final determination result (event).

Meanwhile, when determining that the object estimation accuracy is above "70%" (Y in S33), event determiner 12e first determines whether the date information outputted from date information extractor 12c indicates "April" and the location information outputted from location information extractor 12d indicates "school" to determine events that relate to the unique object determined to be present in step S32 (here, "entrance ceremony" and "graduation ceremony") (S35). When determining that the date information outputted from date information extractor 12c indicates "April" and the location information outputted from location information extractor 12d indicates "school" (Y in S35), event determiner 12e determines that the target single image shows the event "entrance ceremony" (S37).

Meanwhile, when not determining that the date information outputted from date information extractor 12c indicates "April" and the location information outputted from location information extractor 12d indicates "school" (N in S35), event determiner 12e then determines whether the date information outputted from date information extractor 12c indicates "March" and the location information outputted from location information extractor 12d indicates "school" (S36). When determining that the date information outputted from date information extractor 12c indicates "March" and the location information outputted from location information extractor 12d indicates "school" (Y in S36), event determiner 12e determines that the target single image shows the event "graduation ceremony" (S38). In the other case (N in S36), event determiner 12e determines that the target single image shows "another" event excluding "recital", "entrance ceremony", and "graduation ceremony" (S40).

For a specific example of the processes, suppose an example case where obtainer 11 obtains a single image taken at "entrance ceremony" shown in (b) in FIG. 4 and meta information including the date of shooting and the location of shooting of such image. Also suppose that the following processes are performed in analyzer 12 as shown in the example data shown in (a) in FIG. 5: scene recognizer 12a identifies the scene estimation result "recital" and the scene estimation accuracy "75%"; object recognizer 12b identifies the object estimation result "national flag" and the object estimation accuracy "80%"; date information extractor 12c extracts the date information (here, the date of shooting) "April, 1, 2019"; and location information extractor 12d extracts the location information (here, the location of shooting) corresponding to "school". Note that, in a stricter sense, event determiner 12e determines that the location information corresponds to "school" in the following manner. That is to say, event determiner 12e refers to table 13d, stored in database 13, in which the landmark information indicating various landmarks and the landmark position information indicating the positions of the respective landmarks (e.g., the latitude and longitude) are associated with each other. Then, from the location information (the latitude and longitude) extracted by location information extractor 12d, event determiner 12e determines that the location information corresponds to the landmark "school".

In the case where the data is as in the above-described example shown in (a) in FIG. 5, the processes are performed as described below in accordance with the flowchart shown in (b) in FIG. 5.

First, event determiner 12e verifies the scene estimation result outputted from scene recognizer 12a (S30). As a result, event determiner 12e verifies that the scene estimation result is "recital" ("recital" in S30), and thus subsequently determines the scene estimation accuracy ("75%") outputted from scene recognizer 12a (S31).

As a result, event determiner 12e determines that the scene estimation accuracy ("75%") is above "70%" (Y in S31), and thus subsequently determines whether an object unique to the event is present in the object estimation results outputted from object recognizer 12b (S32). In an example shown in (a) in FIG. 5, characteristic object information ("national flag") is stored in table 13a, stored in in database 13, in which the event information indicating various events (here, "entrance ceremony" and "graduation ceremony") and the characteristic object information indicating the characteristic objects used for the respective events ("national flag") are associated with each other. As such, event determiner 12e refers to database 13 to determine that the object information (here, "national flag") obtained by object recognizer 12b is an object unique to the event (Present in S32).

Subsequently, event determiner 12e determines that the object estimation accuracy ("80%") outputted from object recognizer 12b is above "70%" (Y in S33). As such, to determine the event that relates to "national flag" determined to be present in step S32 (here, "entrance ceremony"), event determiner 12e first determines whether the date information (here, the date of shooting) outputted from date information extractor 12c indicates "April" and the location information (here, the location of shooting) outputted from location information extractor 12d indicates "school" (S35).

In an example shown in (a) in FIG. 5, the date information (the date of shooting) outputted from date information extractor 12c indicates "April 1, 2019" and the location information (the location of shooting) outputted from location information extractor 12d is information corresponding to "school". As such, event determiner 12e determines that the date information outputted from date information extractor 12c indicates "April" and the location information (the location of shooting) outputted from location information extractor 12d indicates "school" (Y in S35) and thus determines that the target single image shows the event "entrance ceremony" (S37).

As described above, although the scene estimation result for the single image taken at "entrance ceremony" shown in (b) in FIG. 4 first indicates "recital", the event is then correctly determined to be "entrance ceremony" after the identification of "national flag" that is an object unique to "entrance ceremony".

### [2-3-2. Second Example Operation]

FIG. 6 is a diagram showing two example images for describing a second example operation performed by event determiner 12e included in image processing device 10 according to the embodiment. More specifically, (a) in FIG. 6 shows an example image taken at the event "Shichi-Go-San" (a traditional Japanese ceremony to celebrate the growth of children at the age of seven, five, and three, usually held in November) conducted at shrine, and (b) in FIG. 6 shows an example image taken at the event "New year's first visit to shrine" conducted at shrine. Note that the second example operation is an example operation, performed by image processing device 10, that focuses on the case where the scene estimation result obtained by scene recognizer 12a is "Shichi-Go-San".

FIG. 7 is a diagram for describing the second example operation performed by event determiner 12e included in image processing device 10 according to the embodiment. More specifically, (a) in FIG. 7 shows a first example of input data to event determiner 12e, (b) in FIG. 7 shows a second example of input data to event determiner 12e, and (c) in FIG. 7 shows a flowchart of the second example operation performed by event determiner 12e.

As is known from the two example images shown in FIG. 6, both of these images show similar events at shrine. In the present example operation, event determiner 12e distinctively identifies these similar events. The processing procedure for this will be described below.

First, as shown in the flowchart of (c) in FIG. 7, event determiner 12e verifies the scene estimation result outputted from scene recognizer 12a (S50). When verifying that the scene estimation result is not "Shichi-Go-San" ("another" in S50), event determiner 12e determines that the target single image shows "another" event excluding "Shichi-Go-San" (S56).

Meanwhile, when verifying that the scene estimation result is "Shichi-Go-San" ("Shichi-Go-San" in S50), event determiner 12e then determines whether an object unique to "Shichi-Go-San" is present in the object estimation results outputted from object recognizer 12b (S51). More specifically, event determiner 12e refers to table 13a in which the event information indicating various events (here, "Shichi-Go-San") and the characteristic object information indicating characteristic objects used for the respective events (here, "Chitose candy") are associated with each other. Through this, event determiner 12e determines whether database 13 stores the characteristic object information corresponding to the object information obtained by object recognizer 12b.

When determining that no object unique to the event is present (Not present in S51), event determiner 12e then determines the scene estimation accuracy outputted from scene recognizer 12a (S53). When determining that scene estimation accuracy is below "70%" (N in S53), event determiner 12e determines that the target single image shows "another" event excluding "Shichi-Go-San" (S56). Meanwhile, when determining that the scene estimation accuracy is above "70%" (Y in S53), event determiner 12e then determines whether the date information (here, the date of shooting) outputted from date information extractor 12c indicates "November" and the location information (here, the location of shooting) outputted from location information extractor 12d indicates "shrine" to verify again whether the scene estimation result "Shichi-Go-San" has the possibility of being the final determination result (event) (S54). More specifically, event determiner 12e refers to table 13b, stored in database 13, in which the event information indicating various events and the event time information indicating the times of year when the respective events are conducted are associated with each other and table 13c, stored in database 13, in which the event information indicating various events and the event location information indicating the locations where the respective events are conducted are associated with each other. Through this, event determiner 12e recognizes that "Shichi-Go-San" is conducted at "shrine" in "November". On the basis of this, event determiner 12e determines whether the date information (here, the date of shooting) outputted from date information extractor 12c indicates "November" and the location information (here, the location of shooting) outputted from location information extractor 12d indicates "shrine".

When determining that the date information (here, the date of shooting) outputted from date information extractor 12c indicates "November" and the location information (here, the location of shooting) outputted from location information extractor 12d indicates "shrine" (Y in S54), event determiner 12e determines that the target single image shows the event "Shichi-Go-San" (S55). In the other case (N in S54), event determiner 12e determines that the target single image shows "another" event excluding "Shichi-Go-San" (S56).

Meanwhile, in the determining of whether an object unique to the event is present (S51), when determining that an object unique to "Shichi-Go-San" is present (Present in S51), event determiner 12e then determines the object estimation accuracy outputted from object recognizer 12b (S52). When determining that the object estimation accuracy is above "70%" (Y in S52), event determiner 12e determines that the target single image shows the event "Shichi-Go-San" (S55). In the other case (N in S52), event determiner 12e performs the process of step S53 and the subsequent processes described above to verify again whether the scene estimation result "Shichi-Go-San" has the possibility of being the final determination result (event).

For a specific example of the processes, suppose an example case where obtainer 11 obtains a single image taken at "Shichi-Go-San" and meta information including the date of shooting and the location of shooting of such image. Also suppose that the following processes are performed in analyzer 12 as shown in the first example data shown in (a) in FIG. 7: scene recognizer 12a identifies the scene estimation result "Shichi-Go-San" and the scene estimation accuracy "65%"; object recognizer 12b identifies the object estimation result "Chitose candy" and the object estimation accuracy "85%"; date information extractor 12c extracts the date information (here, the date of shooting) "November, 15, 2019"; and location information extractor 12d extracts the location information (here, the location of shooting) corresponding to "park". Note that, in a stricter sense, event determiner 12e determines that the location information corresponds to "park" in the following manner. That is to say, event determiner 12e refers to table 13d, stored in database 13, in which the landmark information indicating various landmarks and the landmark position information indicating the positions of the respective landmarks (e.g., the latitude and longitude) are associated with each other. Then, from the location information (the latitude and longitude) extracted by location information extractor 12d, event determiner 12e determines that the location information corresponds to the landmark "park".

In the case where the data is as in the above-described first example shown in (a) in FIG. 7, the processes are performed as described below in accordance with the flowchart shown in (c) in FIG. 7.

First, event determiner 12e verifies the scene estimation result outputted from scene recognizer 12a (S50). As a result, event determiner 12e verifies that the scene estimation result is "Shichi-Go-San" ("Shichi-Go-San" in S50), and thus subsequently determines whether an object unique to the event is present in the object estimation results outputted from object recognizer 12b (S51). In an example shown in (a) in FIG. 7, characteristic object information (here, "Chitose candy") is stored in table 13a, stored in database 13, in which the event information indicating various events (here, "Shichi-Go-San") and the characteristic object information indicating the characteristic objects used for the respective events are associated with each other. As such, event determiner 12e refers to database 13 to determine that the object information ("Chitose candy") obtained by object recognizer 12b is an object unique to the event (Present in S51).

Subsequently, event determiner 12e determines the object estimation accuracy outputted from object recognizer 12b (S52). Event determiner 12e determines that the object estimation accuracy ("85%") outputted from object recognizer 12b is above "70%" (Y in S52), and thus determines that the target single image shows the event "Shichi-Go-San" (S55).

As described above, in the present example, the event is correctly determined to be "Shichi-Go-San" for the target single image taken at "Shichi-Go-San", on the basis of the scene estimation result, whether a unique object is present, and the object estimation accuracy, without using the scene estimation accuracy.

For another specific example of the processes, suppose an example case where obtainer 11 obtains a single image taken at "Shichi-Go-San" shown in (a) in FIG. 6 and meta information including the date of shooting and the location of shooting of such image. Also suppose that the following processes are performed in analyzer 12 as shown in the second example data shown in (b) in FIG. 7: scene recognizer 12a identifies the scene estimation result "Shichi-Go-San" and the scene estimation accuracy "85%"; object recognizer 12b estimates no object; date information extractor 12c extracts the date information (here, the date of shooting) "November, 15, 2019"; and location information extractor 12d extracts the location information (here, the location of shooting) corresponding to "shrine". Note that, in a stricter sense, event determiner 12e determines that the location information corresponds to "shrine" in the following manner. That is to say, event determiner 12e refers to table 13d, stored in database 13, in which the landmark information indicating various landmarks and the landmark position information indicating the positions of the respective landmarks (e.g., the latitude and longitude) are associated with each other. Then, from the location information (the latitude and longitude) extracted by location information extractor 12d, event determiner 12e determines that the location information corresponds to the landmark "shrine".

In the case where the data is as in the above-described second example shown in (b) in FIG. 7, the processes are performed as described below in accordance with the flowchart shown in (c) in FIG. 7.

First, event determiner 12e verifies the scene estimation result outputted from scene recognizer 12a (S50). As a result, event determiner 12e verifies that the scene estimation result is "Shichi-Go-San" ("Shichi-Go-San" in S50), and thus subsequently determines whether an object unique to the event is present in the object estimation results outputted from object recognizer 12b (S51). In an example shown in (b) in FIG. 7, object recognizer 12b has found no object, and thus event determiner 12e determines that no object unique to the event is present (Not present in S51).

Subsequently, event determiner 12e determines the scene estimation accuracy outputted from scene recognizer 12a (S53). As a result, event determiner 12e determines that the scene estimation accuracy ("85%") is above "70%" (Y in S53) and thus subsequently determines whether the date information (here, the date of shooting) outputted from date information extractor 12c indicates "November" and the location information (here, the location of shooting) outputted from location information extractor 12d indicates "shrine" (S54).

Here, the date information (here, the date of shooting) outputted from date information extractor 12c indicates "November" and the location information (here, the location of shooting) outputted from location information extractor 12d indicates "shrine" (Y in S54). As such, event determiner 12e determines that the target single image shows the event "Shichi-Go-San" (S55).

As described above, in the present example, the event is correctly determined to be "Shichi-Go-San" for the target single image taken at "Shichi-Go-San" shown in (a) in FIG. 6, on the basis of the scene estimation accuracy, the date information (here, the date of shooting), and the location information (here, the location of shooting), even in the case where no object unique to the event has been found.

### [2-3-3. Third Example Operation]

FIG. 8 is a diagram showing two example images for describing a third example operation performed by event determiner 12e included in image processing device 10 according to the embodiment. More specifically, (a) in FIG. 8 shows an example image taken at the event "wedding" conducted at hotel, and (b) in FIG. 8 shows an example image taken at the event "funeral" conducted at funeral hall. Note that the third example operation is an example operation, performed by image processing device 10, that focuses on the case where the scene estimation result obtained by scene recognizer 12a is "funeral".

FIG. 9 is a diagram for describing the third example operation performed by event determiner 12e included in image processing device 10 according to the embodiment. More specifically, (a) in FIG. 9 shows an example of input data to event determiner 12e, and (b) in FIG. 9 shows a flowchart of the third example operation performed by event determiner 12e.

As is known from the two example images shown in FIG. 8, both of these images show similar events in which formally dressed people appear. In the present example operation, event determiner 12e distinctively identifies these similar events. The processing procedure for this will be described below.

First, as shown in the flowchart of (b) in FIG. 9, event determiner 12e verifies the scene estimation result outputted from scene recognizer 12a (S60). When verifying that the scene estimation result is not "funeral" ("another" in S60), event determiner 12e determines that the target single image shows "another" event excluding "funeral" (S68).

Meanwhile, when verifying that the scene estimation result is "funeral" ("funeral" in S60), event determiner 12e then determines the scene estimation accuracy outputted from scene recognizer 12a (S61). When determining that scene estimation accuracy is below "70%" (N in S61), event determiner 12e determines that the target single image shows "another" event excluding "funeral" (S68).

Meanwhile, when determining that the scene estimation accuracy is above "70%" (Y in S61), event determiner 12e then determines whether an object unique to "wedding" that is an event similar to "funeral" is present in the object estimation results outputted from object recognizer 12b (S62). More specifically, event determiner 12e refers to table 13a in which the event information indicating "wedding" and the characteristic object information indicating a characteristic object used for "wedding" (here, "white necktie") are associated with each other. Through this, event determiner 12e determines whether database 13 stores characteristic object information corresponding to the object information obtained by object recognizer 12b. When determining that no object unique to the event is present (Not present in S62), event determiner 12e determines whether the location information (here, the location of shooting) outputted from location information extractor 12d indicates "funeral hall" to verify again whether the scene estimation result "funeral" has the possibility of being the final determination result (event) (S65). More specifically, event determiner 12e refers to table 13c, stored in database 13, in which the event information indicating various events and the event location information indicating the locations where the respective events are conducted are associated with each other. Through this, event determiner 12e recognizes that "funeral" is conducted at "funeral hall". On the basis of this, event determiner 12e determines whether the location information (here, the location of shooting) outputted from location information extractor 12d indicates "funeral hall". When determining that the location information (here, the location of shooting) outputted from location information extractor 12d indicates "funeral hall" (Y in S65), event determiner 12e determines that the target single image shows the event "funeral" (S67). In the other case (N in S65), event determiner 12e determines that the target single image shows "another" event excluding "funeral" (S68).

Meanwhile, in the determining of whether an object unique to "wedding" is present (S62), when determining that an object unique to "wedding" is present (Present in S62), event determiner 12e then determines the object estimation accuracy outputted from object recognizer 12b (S63). When determining that the object estimation accuracy is below "70%" (N in S63), event determiner 12e performs the process of step S65 and the subsequent processes described above to verify again whether the scene estimation result "funeral" has the possibility of being the final determination result (event).

Meanwhile, when determining that the object estimation accuracy is above "70%" (Y in S63), event determiner 12e determines whether the location information (here, the location of shooting) outputted from location information extractor 12d indicates "hotel" or "ceremonial hall" to verify "wedding" that is an event relating to the unique object determined to be present in step S62 (S64). More specifically, event determiner 12e refers to table 13c, stored in database 13, in which the event information indicating various events and the event location information indicating the locations where the respective events are conducted are associated with each other. Through this, event determiner 12e recognizes that "wedding" is conducted at "hotel" or "ceremonial hall". On the basis of this, event determiner 12e determines whether the location information (here, the location of shooting) outputted from location information extractor 12d indicates "hotel" or "ceremonial hall".

When determining that the location information (here, the location of shooting) outputted from location information extractor 12d indicates "hotel" or "ceremonial hall" (Y in S64), event determiner 12e determines that the target single image shows the event "wedding" (S66). In the other case (N in S64), event determiner 12e performs the process of step S65 and the subsequent processes described above to verify again whether the scene estimation result "funeral" has the possibility of being the final determination result (event).

For a specific example of the processes, suppose an example case where obtainer 11 obtains a single image taken at "wedding" shown in (a) in FIG. 8 and meta information including the date of shooting and the location of shooting of such image. Also suppose that the following processes are performed in analyzer 12 as shown in the example data shown in (a) in FIG. 9: scene recognizer 12a identifies the scene estimation result "funeral" and the scene estimation accuracy "85%"; object recognizer 12b identifies the object estimation result "white necktie" and the object estimation accuracy "75%"; date information extractor 12c extracts the date information (here, the date of shooting) "June, 19, 2019"; and location information extractor 12d extracts the location information (here, the location of shooting) corresponding to "hotel". Note that, in a stricter sense, event determiner 12e determines that the location information corresponds to "hotel" in the following manner. That is to say, event determiner 12e refers to table 13d, stored in database 13, in which the landmark information indicating various landmarks and the landmark position information indicating the positions of the respective landmarks (e.g., the latitude and longitude) are associated with each other. Then, from the location information (the latitude and longitude) extracted by location information extractor 12d, event determiner 12e determines that the location information corresponds to the landmark "hotel".

In the case where the data is as in the above-described example shown in (a) in FIG. 9 the processes are performed as described below in accordance with the flowchart shown in (b) in FIG. 9.

First, event determiner 12e verifies the scene estimation result outputted from scene recognizer 12a (S60). As a result, event determiner 12e verifies that the scene estimation result is "funeral" ("funeral" in S60), and thus subsequently determines the scene estimation accuracy ("85%") outputted from scene recognizer 12a (S61).

As a result, event determiner 12e determines that the scene estimation accuracy ("85%") is above "70%" (Y in S61), and thus subsequently determines whether an object unique to "wedding" that is an event similar to "funeral" is present in the object estimation results outputted from object recognizer 12b (S62). In an example shown in (a) in FIG. 9, characteristic object information ("white necktie") is stored in table 13a that is stored in database 13, in which the event information indicating "wedding" and the characteristic object information indicating a characteristic object used for "wedding" are associated with each other. As such, event determiner 12e refers to database 13 to determine that the object information ("white necktie") obtained by object recognizer 12b is an object unique to "wedding" (Y in S62).

Subsequently, event determiner 12e determines that the object estimation accuracy ("75%") outputted from object recognizer 12b is above "70%" (Y in S63). As such, to determine an event that relates to "white necktie" determined to be present in step S62 (here, "wedding"), event determiner 12e then determines whether the location information (here, the location of shooting) outputted from location information extractor 12d indicates "hotel" or "ceremonial hall" (S64).

In an example shown in (a) in FIG. 9, the location information (here, the location of shooting) outputted from location information extractor 12d corresponds to "hotel". As such, event determiner 12e determines that the location information (here, the location of shooting) outputted from location information extractor 12d indicates "hotel" or "ceremonial hall" (Y in S64) and thus determines that the target single image shows the event "wedding" (S66).

As described above, although the scene estimation result for the single image taken at "wedding" shown in (a) in FIG. 8 first indicates "funeral", the event is then correctly determined to be "wedding" after the identification of "white necktie" that is an object unique to "wedding".

Three example operations have been described above, but these example operations correspond to specific scene estimation results ("recital", "Shichi-Go-San", and "funeral"). Event determiner 12e also determines scenes other than the scenes of such specific scene estimation results, using the same algorithm used for these example operations.

### [3. Effects, etc.]

As described above, image processing device 10 according to the embodiment includes: obtainer 11 that obtains a single image and meta information indicating additional information of the image; and analyzer 12 that performs an analysis of the meaning of the image and the meta information obtained, determines an event shown in the image, using the meaning obtained by the analysis, and outputs event information that identifies the event determined. With this, analyzer 12 analyzes the meaning of the single image and the meta information. Thus, the event can be determined even from a single image.

Also, analyzer 12 includes at least one of: scene recognizer 12a that recognizes, from the image obtained, a scene shown by the entirety of the image, and outputs scene information indicating the scene recognized; object recognizer 12b that recognizes, from the image obtained, an object included in the image, and outputs object information indicating the object recognized; date information extractor 12c that extracts, from the meta information obtained, date information included in the meta information and indicating the date on which the image is generated, and outputs the date information extracted; or location information extractor 12d that extracts, from the meta information obtained, location information included in the meta information and indicating the location where single image is generated, and outputs the location information extracted; and event determiner 12e that performs an analysis of the meaning of at least one of the scene information, the object information, the date information, or the location information obtained by the at least one of scene recognizer 12a, object recognizer 12b, date information extractor 12c, or location information extractor 12d, and determines the event shown in the image, using the meaning obtained by the analysis. With this, the meaning of at least one of the scene information, the object information, the date information, or the location information is analyzed from the single image and the meta information. Thus, the event shown in the single image can be determined.

Image processing device 10 further includes: database 13 that stores a plurality of correspondences between at least one of the scene information, the object information, the date information, or the location information and the meaning corresponding to the at least one of the scene information, the object information, the date information, or the location information. Here, event determiner 12e refers to database 13 to perform the analysis of the meaning of the at least one of the scene information, the object information, the date information, or the location information obtained by the at least one of scene recognizer 12a, object recognizer 12b, date information extractor 12c, or location information extractor 12d. With this, the meaning of at least one of the scene information, the object information, the date information, or the location information is analyzed with reference to database 13. This enables an algorithm for event determination to be changed by editing database 13.

Also, analyzer 12 includes object recognizer 12b as the at least one of scene recognizer 12a, object recognizer 12b, date information extractor 12c, or location information extractor 12d. Database 13 stores event information and characteristic object information in correspondence with each other, the characteristic object information indicating a characteristic object used for the event indicated by the event information. Event determiner 12e identifies, from database 13, the characteristic object information corresponding to the object information obtained by object recognizer 12b, and obtains, as the meaning corresponding to the object information, the event information stored in database 13 in correspondence with the characteristic object information identified. With this, the meaning of the object information is analyzed, using characteristic object information used for a specific event. Thus, an event can be correctly determined from a plurality of similar events.

Also, analyzer 12 includes date information extractor 12c as the at least one of scene recognizer 12a, object recognizer 12b, date information extractor 12c, or location information extractor 12d. Database 13 stores event information and event time information in correspondence with each other, the event time information indicating a time of year when the event indicated by the event information is conducted, and event determiner 12e identifies, from database 13, the event time information corresponding to the date information obtained by date information extractor 12c, and obtains, as the meaning corresponding to the date information, the event information stored in database 13 in correspondence with the event time information identified. With this, the date information obtained by date information extractor 12c is checked against the event time information indicating the time of year when a specific event is conducted. Thus, an event can be correctly determined from a plurality of similar events.

Also, analyzer 12 includes location information extractor 12d as the at least one of scene recognizer 12a, object recognizer 12b, date information extractor 12c, or location information extractor 12d. Database 13 stores landmark information indicating a landmark and landmark position information in correspondence with each other, the landmark position information indicating a position of the landmark indicated by the landmark information. Event determiner 12e identifies, from database 13, the landmark position information corresponding to the location information obtained by location information extractor 12d, and obtains, as the meaning corresponding to the location information, the landmark information stored in database 13 in correspondence with the landmark position information identified. With this, the landmark information is obtained from the location information obtained by location information extractor 12d. Thus, by checking the landmark information against the event location information indicating the location where a specific event is conducted, an event can be correctly determined from a plurality of similar events.

The image processing method according to the embodiment includes: obtaining a single image and meta information indicating additional information of the image, the obtaining performed by obtainer 11; and analyzing the meaning of the image and the meta information obtained, determining an event shown in the image, by use of the meaning obtained by the analysis, and outputting event information that identifies the event determined, the analyzing, the determining, and the outputting performed by analyzer 12. With this, the meaning of the single image and the meta information is analyzed in the analyzing. Thus, the event can be determined even from a single image.

### [Variation]

The following describes an image processing device according to a variation of the embodiment.

The image processing device according to the variation has basically the same configuration as that of image processing device 10 according to the embodiment. Stated differently, the image processing device according to the variation, which is a device that determines an event shown in a single image, includes obtainer 11, analyzer 12 (scene recognizer 12a, object recognizer 12b, date information extractor 12c, location information extractor 12d, and an event determiner), and database 13.

Note that the image processing device according to the variation includes event determiner 20 according to the variation shown in FIG. 10 to be described later, instead of event determiner 12e of image processing device 10 according to the embodiment. Also, in addition to the data in the embodiment, database 13 included in the image processing device according to the variation stores the following tables shown in FIG. 11 to be described later: table 13e ((a) in FIG. 11) in which date information and object information that are highly related are associated with each other; table 13f ((b) in FIG. 11) in which location information and object information that are highly related are associated with each other; and table 13g ((c) in FIG. 11) in which location information and date information that are highly related are associated with each other. The following mainly describes the differences from image processing device 10 according to the embodiment.

FIG. 10 is a block diagram showing the configuration of event determiner 20 included in the image processing device according to the variation of the embodiment. Note that the diagram also shows the peripheral elements of event determiner 20 (scene recognizer 12a, object recognizer 12b, date information extractor 12c, and location information extractor 12d). FIG. 11 is a diagram showing example data (which is stored in addition to the data in the embodiment) stored in database 13 included in the image processing device according to the variation.

As shown in FIG. 10, event determiner 20 includes candidate event identifier 21, likelihood adjuster 22, and event outputter 23.

Candidate event identifier 21 identifies at least one candidate event and identifies, for each of the at least one candidate event, a reference event likelihood that is a likelihood that the image obtained by obtainer 11 shows the candidate event, on the basis of the scene information outputted from scene recognizer 12a. To be more specific, candidate event identifier 21 identifies at least one candidate event from the scene estimation result included in the scene information outputted from scene recognizer 12a and identifies the reference event likelihood from the scene estimation accuracy included in the scene information outputted from scene recognizer 12a.

Using the meanings of the object information, the date information, and the location information obtained by object recognizer 12b, date information extractor 12c, and location information extractor 12d, likelihood adjuster 22 adjusts the reference event likelihood identified by candidate event identifier 21, thereby calculating an event likelihood of each of the at least one candidate event.

To be more specific, likelihood adjuster 22 refers to table 13a in which the event information indicating various events and the characteristic object information indicating the characteristic objects used for the respective events are associated with each other. Through this, likelihood adjuster 22 identifies, from database 13, the characteristic object information corresponding to the object information obtained by object recognizer 12b. Then, depending on whether the event information stored in database 13 in correspondence with the identified characteristic object information is any one of the at least one candidate event identified by candidate event identifier 21, likelihood adjuster 22 adjusts the reference event likelihood corresponding to the candidate event by adding or subtracting a predetermined value to or from the reference event likelihood.

Likelihood adjuster 22 also refers to table 13b in which the event information indicating various events and the event time information indicating the times of year when the respective events are conducted are associated with each other. Through this, likelihood adjuster 22 identifies, from database 13, the event time information corresponding to the date information obtained by date information extractor 12c. Then, depending on whether the event information stored in database 13 in correspondence with the identified event time information is any one of the at least one candidate event identified by candidate event identifier 21, likelihood adjuster 22 adjusts the reference event likelihood corresponding to the candidate event by adding or subtracting a predetermined value to or from the reference event likelihood.

Likelihood adjuster 22 further refers to table 13c in which the event information indicating various events and the event location information indicating the locations where the respective events are conducted are associated with each other. Through this, likelihood adjuster 22 identifies, from database 13, the event location information corresponding to the location information obtained by location information extractor 12d. Then, depending on whether the event information stored in database 13 in correspondence with the identified event location information is any one of the at least one candidate event identified by candidate event identifier 21, likelihood adjuster 22 adjusts the reference event likelihood corresponding to the candidate event by adding or subtracting a predetermined value to or from the reference event likelihood.

Event outputter 23 outputs, as the event determination result, the candidate event shown in the image, on the basis of the event likelihood of each of the at least one candidate event calculated by likelihood adjuster 22.

As shown in FIG. 11, in addition to tables 13a through 13d according to the embodiment, database 13 included in the image processing device according to the present variation stores: table 13e in which a pair of date information and object information that are highly related are registered in correspondence with each other; table 13f in which a pair of location information and object information that are highly related are registered in correspondence with each other; and table 13g in which a pair of location information and date information that are highly related are registered in correspondence with each other.

In the present variation, in addition to adjusting each reference event likelihood on the basis of the object information, the event time information, and the event location information described above, likelihood adjuster 22 further adjusts the reference event likelihood on the basis of the relation between date information and object information, the relation between location information and object information, and the relation between location information and date information with reference to tables 13e through 13g.

The following describes an operation for this performed by the image processing device according to the variation with the above configuration. Here, the operation of event determiner 20 that performs a characteristic operation will be described in detail.

FIG. 12 is a flowchart of an operation performed by event determiner 20 included in the image processing device according to the variation of the embodiment. First, candidate event identifier 21 identifies at least one candidate event shown in an image obtained by obtainer 11, on the basis of the scene estimation result included in the scene information outputted from scene recognizer 12a and identifies a reference event likelihood, on the basis of the scene estimation accuracy included in the scene information outputted from scene recognizer 12a (S70).

More specifically, candidate event identifier 21 calculates a reference event likelihood, for example, by multiplying, by a weight coefficient corresponding to the scene estimation accuracy, a predetermined value that is preliminarily determined in correspondence with the scene estimation result. Candidate event identifier 21 also identifies, as a candidate event, a first target that is the most probable scene, on the basis of the scene estimation result and the scene estimation accuracy outputted from scene recognizer 12a. Note that the second and subsequent most probable scene estimation results may be identified in the same manner to be added as candidate events.

Subsequently, likelihood adjuster 22 refers to table 13a in which the event information indicating various events and the characteristic object information indicating the characteristic objects used for the respective events are associated with each other. Through this, likelihood adjuster 22 identifies, from database 13, the characteristic object information corresponding to the object information obtained by object recognizer 12b. Then, depending on whether the event information stored in database 13 in correspondence with the identified characteristic object information is any one of the at least one candidate event identified by candidate event identifier 21, likelihood adjuster 22 calculates an event likelihood by adding or subtracting a predetermined value to or from the reference event likelihood corresponding to the candidate event (S71).

More specifically, likelihood adjuster 22 adds a predetermined value to the reference event likelihood in the case where the characteristic object information corresponding to the object information obtained by object recognizer 12b is associated with the candidate event in table 13a. Meanwhile, likelihood adjuster 22 performs neither addition nor subtraction on the reference event likelihood or subtracts a predetermined value from the reference event likelihood in the case where such characteristic object information is not associated with the candidate event or is registered as an object that conflicts with the candidate event.

Subsequently, likelihood adjuster 22 refers to table 13b in which the event information indicating various events and the event time information indicating times of year when the respective events are conducted are associated with each other. Through this, likelihood adjuster 22 identifies, from database 13, the event time information corresponding to the date information obtained by date information extractor 12c. Then, depending on whether the event information stored in database 13 is any one of the at least one candidate event identified by candidate event identifier 21, likelihood adjuster 22 further adjusts the event likelihood that has been adjusted in step S71 by adding or subtracting a predetermined value to or from the event likelihood (S72).

More specifically, likelihood adjuster 22 adds a predetermined value to the event likelihood that has been adjusted in step S71 in the case where event time information corresponding to the date information obtained by date information extractor 12c is associated with the candidate event in table 13b. Meanwhile, likelihood adjuster 22 performs neither addition nor subtraction on the event likelihood adjusted in step S71 or subtracts a predetermined value from such event likelihood in the case where such event time information is not associated with the candidate event or is registered as an object that conflicts with the candidate event. Note that when determining with reference to database 13, for example, that the candidate event is an event that is conducted regardless of times of year, likelihood adjuster 22 may not perform the adjustment in step S72.

Further, likelihood adjuster 22 refers to table 13c in which the event information indicating various events and the event location information indicating the locations where the respective events are conducted are associated with each other. Through this, likelihood adjuster 22 identifies, from database 13, the event location information corresponding to the location information obtained by location information extractor 12d. Then, depending on whether the event information stored in database 13 in correspondence with the identified event location information is any one of the at least one candidate event identified by candidate event identifier 21, likelihood adjuster 22 further adjusts the event likelihood that has been adjusted in step S72 by adding or subtracting a predetermined value to or from the event likelihood (S73).

More specifically, likelihood adjuster 22 adds a predetermined value to the event likelihood that has been adjusted in step S72 in the case where event location information corresponding to the location information obtained by location information extractor 12d is associated with the candidate event in table 13c. Meanwhile, likelihood adjuster 22 performs neither addition nor subtraction on the event likelihood adjusted in step S72 or subtracts a predetermined value from such event likelihood in the case where such event location information is not associated with the candidate event or is registered as an object that conflicts with the candidate event.

Note that when determining with reference to database 13, for example, that the candidate event is an event that is conducted regardless of location, likelihood adjuster 22 may not perform the adjustment in step S73. For example, when the event information corresponding to the candidate event is not registered in table 13c, likelihood adjuster 22 determines that such candidate event is an event that is conducted regardless of location, and does not perform the adjustment in step S73.

Subsequently, likelihood adjuster 22 refers to table 13e, stored in database 13, in which a pair of date information and object information that are highly related are registered in correspondence with each other. Through this, likelihood adjuster 22 further adjusts the event likelihood that has been adjusted in step S73 by adding or subtracting a predetermined value to or from such event likelihood, on the basis of the relation between the date information obtained by date information extractor 12c and the object information obtained by object recognizer 12b (S74).

Regarding the candidate event "Hina Festival" (a Japanese festival for girls held on March 3), for example, when the date information "March 3" obtained by date information extractor 12c and the object information "Hina doll" obtained by object recognizer 12b are registered in table 13e as highly related items of information as illustrated in table 13e in (a) in FIG. 11, likelihood adjuster 22 further adds a predetermined value to the event likelihood of the candidate event "Hina festival" that has been adjusted in step S73, also with reference to the correspondence between the event information "Hina festival" and the event time information "March 3" in table 13b shown in (b) in FIG. 1B. Stated differently, the date information "March 3" and the object information "Hina doll" are registered in table 13e as highly related items of information and at least one of these items of information ("March 3") is associated with the candidate event "Hina festival" in table 13b, likelihood adjuster 22 further adds a predetermined value to the event likelihood of the candidate event "Hina festival". Note that table 13e may include a column for event information. In this case, the mere reference to table 13e enables the addition of a predetermined value to the event likelihood of the candidate event "Hina festival".

Meanwhile, in the case where the object information obtained by object recognizer 12b is "Hina doll" but the date information obtained by date information extractor 12c is "May 5", the relation between these items of information is not registered in table 13e. As such, likelihood adjuster 22 does not adjust the event likelihood of the candidate event "Hina festival" that has been adjusted in step S73.

Subsequently, likelihood adjuster 22 refers to table 13f, stored in database 13, in which a pair of location information and object information that are highly related are registered in correspondence with each other. Through this, likelihood adjuster 22 further adjusts the event likelihood that has been adjusted in step S74 by adding or subtracting a predetermined value to or from such event likelihood, on the basis of the relation between the location information obtained by location information extractor 12d and the object information obtained by object recognizer 12b (S75).

Regarding the candidate event "wedding", for example, when the location information "hotel" obtained by location information extractor 12d and the object information "wedding dress" obtained by object recognizer 12b are registered in table 13f as highly related items of information as illustrated in table 13f in (b) in FIG. 11, likelihood adjuster 22 further adds a predetermined value to the event likelihood of the candidate event "wedding" that has been adjusted in step S74, also with reference to the correspondence between the event information "wedding" and the event location information "hotel" in table 13c shown in (c) in FIG. 1B. Stated differently, the location information "hotel" and the object information "wedding dress" are registered in table 13f as highly related items of information and at least one of these items of information ("hotel") is associated with the candidate event "wedding" in table 13c, likelihood adjuster 22 further adds a predetermined value to the event likelihood of the candidate event "wedding". Note that table 13f may include a column for event information. In this case, the mere reference to table 13f enables the addition of a predetermined value to the event likelihood of the candidate event "wedding".

Meanwhile, when the candidate event is "graduation ceremony", there is no information that matches the event information "graduation ceremony". As such, likelihood adjuster 22 subtracts a predetermined value from the event likelihood of the candidate event "graduation ceremony" that has been adjusted in step S74, or performs neither addition nor subtraction on such event likelihood. Also, when the location information obtained by location information extractor 12d is "school" and the object information obtained by object recognizer 12b is "wedding dress", the relation between these items of information is not registered in table 13f. As such, likelihood adjuster 22 does not adjust the event likelihood of the candidate event "wedding" that has been adjusted in step S74.

Further, likelihood adjuster 22 refers to table 13g, stored in database 13, in which a pair of location information and date information that are highly related are registered in correspondence with each other. Through this, likelihood adjuster 22 further adjusts the event likelihood that has been adjusted in step S75 by adding or subtracting a predetermined value to or from such event likelihood, on the basis of the relation between the location information obtained by location information extractor 12d and the date information obtained by date information extractor 12c (S76).

Regarding the candidate event "Shichi-Go-San", for example, when the location information "shrine" obtained by location information extractor 12d and the date information "November 15" obtained by date information extractor 12c are registered in table 13g as highly related items of information as illustrated in table 13g in (c) in FIG. 11, likelihood adjuster 22 further adds a predetermined value to the event likelihood of the candidate event "Shichi-Go-San" that has been adjusted in step S75, also with reference to the correspondence between the event information "Shichi-Go-San" and the event time information "November" in table 13b shown in (b) in FIG. 1B. Stated differently, the location information "shrine" and the date information "November 15" are registered in table 13g as highly related items of information and at least one of these items of information ("November 15") is associated with the candidate event "Shichi-Go-San" in table 13b, likelihood adjuster 22 further adds a predetermined value to the event likelihood of the candidate event "Shichi-Go-San". Note that table 13g may include a column for event information. In this case, the mere reference to table 13g enables the addition of a predetermined value to the event likelihood of the candidate event "Shichi-Go-San".

Meanwhile, when the candidate event is "New year's first visit to shrine", there is no information that matches the event information "New year's first visit to shrine". As such, likelihood adjuster 22 subtracts a predetermined value from the event likelihood of the candidate event "Shichi-Go-San" that has been adjusted in step S75, or performs neither addition nor subtraction on such event likelihood.

Finally, event outputter 23 outputs the candidate event shown in the image as the event determination result, on the basis of the event likelihood of each of the at least one candidate event calculated by likelihood adjuster 22 (S77). For example, event outputter 23 outputs, as the event determination result, the candidate event whose event likelihood calculated by likelihood adjuster 22 is highest and exceeds a predetermined threshold.

Note that FIG. 13 shows an example of how characteristic object information, event time information, and event location information that conflict with a candidate event (i.e., event information) are registered. FIG. 13 is a diagram showing three forms of table showing event information and conflicting characteristic object information. More specifically, (a) in FIG. 13 shows table 13h that shows only the correspondence between event information and conflicting characteristic object information. (b) in FIG. 13 shows table 13i in which information "flags" are registered in addition to the event information and the characteristic object information, where the flags indicate whether event information and characteristic object information match (the case where a predetermined value is added (flag=1)) or conflict (the case where a predetermined value is subtracted (flag=0)). (c) in FIG. 13 shows table 13j in which "predetermined value" used for adjustment (sings + and - mean addition and subtraction) is registered in addition to the event information and the characteristic object information. The foregoing three forms are also applicable to event information and conflicting event time information and to event information and conflicting event location information. Further, these three forms may also be applied to tables 13e through 13g shown in FIG. 11.

As described above, in the image processing device according to the present variation, event determiner 20 includes: candidate event identifier 21 that identifies at least one candidate event and a reference event likelihood of each of the at least one candidate event, based on the scene information outputted from scene recognizer 12a, the reference event likelihood being a likelihood that the image shows the candidate event; likelihood adjuster 22 that adjusts the reference event likelihood of the at least one candidate event, using the meaning of the at least one of the object information, the date information, or the location information, to calculate an event likelihood of each of the at least one candidate event; and event outputter 23 that outputs, as an event determination result, one of the at least one candidate event shown in the image, based on the event likelihood of each of the at least one candidate event calculated by likelihood adjuster 22.

With this, the candidate event and the reference event likelihood are identified by the process performed by scene recognizer 12a, and the reference event likelihood is adjusted, using the meaning of at least one of the object information, the date information, or the location information. As such, unlike the embodiment that identifies an event using a threshold, adjustment is performed in an analog fashion using at least one of the object information, the date information, or the location information. This can achieve a highly accurate determination of an event shown in the single image.

More specifically, analyzer 12 includes object recognizer 12b as the at least one of object recognizer 12b, date information extractor 12c, or location information extractor 12d. Database 13 stores event information and characteristic object information in correspondence with each other, the characteristic object information indicating a characteristic object used for the event indicated by the event information. Likelihood adjuster 22 identifies, from database 13, the characteristic object information corresponding to the object information obtained by object recognizer 12b, and depending on whether the event information stored in database 13 in correspondence with the characteristic object information identified is any one of the at least one candidate event identified by candidate event identifier 21, adjusts the reference event likelihood corresponding to the candidate event by adding or subtracting a predetermined value to or from the reference event likelihood. With this, the reference event likelihood is adjusted in an analog fashion, using the object information. This can achieve a highly accurate determination of an event shown in the single image.

Also, analyzer 12 includes date information extractor 12c as the at least one of object recognizer 12b, date information extractor 12c, or location information extractor 12d. Database 13 stores event information and event time information in correspondence with each other, the event time information indicating a time of year when the event indicated by the event information is conducted. Likelihood adjuster 22 identifies, from database 13, the event time information corresponding to the date information obtained by date information extractor 12c, and depending on whether the event information stored in database 13 in correspondence with the event time information identified is any one of the at least one candidate event identified by candidate event identifier 21, adjusts the reference event likelihood corresponding to the candidate event by adding or subtracting a predetermined value to or from the reference event likelihood. With this, the reference event likelihood is adjusted in an analog fashion, using the date information. This can achieve a highly accurate determination of an event shown in the single image.

Also, analyzer 12 includes location information extractor 12d as the at least one of object recognizer 12b, date information extractor 12c, or location information extractor 12d. Database 13 stores event information and event location information in correspondence with each other, the event location information indicating a location where the event indicated by the event information is conducted. Likelihood adjuster 22 identifies, from database 13, the event location information corresponding to the location information obtained by location information extractor 12d, and depending on whether the event information stored in database 13 in correspondence with the event location information identified is any one of the at least one candidate event identified by candidate event identifier 21, adjusts the reference event likelihood corresponding to the candidate event by adding or subtracting a predetermined value to or from the reference event likelihood. With this, the reference event likelihood is adjusted in an analog fashion, using the location information. This can achieve a highly accurate determination of an event shown in the single image.

Also, analyzer 12 includes at least two of object recognizer 12b, date information extractor 12c, or location information extractor 12d. Database 13 stores at least one pair of the date information and the object information that are highly related, the location information and the object information that are highly related, or the location information and the date information that are highly related. Likelihood adjuster 22 identifies whether database 13 stores a correspondence between the date information and the object information, between the location information and the object information, or between the location information and the date information obtained from the at least two of object recognizer 12b, date information extractor 12c, or location information extractor 12d, and adjusts the reference event likelihood by adding or subtracting a predetermined value to or from the reference event likelihood when database 13 stores the correspondence. With this, the reference event likelihood is adjusted in an analog fashion, using the relation between the date information and the object information, the relation between the location information and the object information, or the relation between the location information and the date information. This can achieve a more highly accurate determination of an event shown in the single image.

Also, the scene information includes a scene estimation result indicating the scene estimated by scene recognizer 12a and a scene estimation accuracy indicating an accuracy of estimating the scene. Candidate event identifier 21 identifies the at least one candidate event from the scene estimation result included in the scene information outputted from scene recognizer 12a and identifies the reference event likelihood from the scene estimation accuracy included in the scene information outputted from scene recognizer 12a. This causes the reference event likelihood to be a value that depends on the scene estimation accuracy. This can achieve a highly accurate determination of an event shown in the single image.

### [Other Embodiments]

The embodiment and variation thereof have been described above to illustrate the technology disclosed in the present application. However, the embodiment and variation thereof are not limited thereto and thus modification, replacement, addition, omission, and so forth can be applied to the embodiment and variation thereof where appropriate. Also, elements described in the foregoing embodiment and variation thereof can be combined to serve as a new embodiment.

The following collectively describes other embodiments.

In the foregoing embodiment, for example, the meaning of the object information obtained by object recognizer 12b is interpreted, using characteristic object information, but the interpretation of the object information is not limited to this. For example, database 13 may store, for each member of a family who uses image processing device 10, a table in which family information that identifies a person who constitutes the family of the user of image processing device 10 and an image of the person corresponding to such family information are associated with each other. Event determiner 12e may identify, from database 13, the image corresponding to the object information obtained by object recognizer 12g and obtain the family information stored in database 13 in correspondence with the identified image as the meaning corresponding to the object information. This enables the obtainment of information indicating whether an event shown in a single image is a family-related event.

In the foregoing embodiment, the scene estimation result outputted from scene recognizer 12a is verified in the first step of the scene determination, but the present disclosure is not limited to such flow. For example, whether database 13 stores the characteristic object information corresponding to the object information obtained by object recognizer 12b may be identified first. When database 13 stores such characteristic object information, one event may then be determined to be a candidate for the event corresponding to such characteristic object information, using the scene information, the date information, and the location information as supplemental information.

Also, a weight may be assigned to the determination criteria of the scene information, the object information, the date information, and the location information on an event-by-event basis, and a determination may be made using the determination priority that is changed in accordance with the weight of the determination criteria.

Also, in the foregoing embodiment, one scene is determined for a single image, but a plurality of scenes and the probability of each of such scenes may be determined. The probability of each scene may be calculated, using the scene estimation accuracy and the object estimation accuracy.

In the foregoing variation, likelihood adjuster 22 adjusts the reference event likelihood, using the meanings of the object information, the date information, and the location information obtained by object recognizer 12b, date information extractor 12c, and location information extractor 12d, but likelihood adjuster 22 does not necessarily have to use all of the object information, the date information, and the location information. Likelihood adjuster 22 may thus adjust the reference event likelihood, using at least one of the object information, the date information, or the location information.

In the foregoing variation, event outputter 23 outputs, as the event determination result, the candidate event whose event likelihood calculated by likelihood adjuster 22 is highest and exceeds a predetermined threshold, but the present disclosure is not limited to this. Event outputter 23 may thus output all candidate events that exceed a predetermined value to which the respective event likelihoods are added. Alternatively, event outputter 23 may output a predetermined number of candidate events, starting with the one with the highest event likelihood.

In the foregoing variation, database 13 stores tables 13e through 13g showing the relation between the date information, the object information, and the location information, but may store tables showing, instead of these items of information, the relation between the object time information, the characteristic object information, and the object location information corresponding to the date information, the object information, and the location information.

In the foregoing variation, tables 13e through table 13g showing the relation between two items of information are tables in which the two items of information are directly associated with each other, but the tables are not limited to having such structure. The correspondence may thus be indirectly shown across a plurality of tables in a distributed manner. For example, likelihood adjuster 22 may refer to the correspondence between the event information "entrance ceremony" and the characteristic object information "national flag" stored in table 13a and the correspondence between the event information "entrance ceremony" and the event time information "April 1" stored in table 13b. Through this, likelihood adjuster 22 may indirectly determine that the characteristic object information (or object information) "national flag" and the event time information (or date information) "April 1" are related to each other.

In the foregoing embodiment, a microcomputer is described as an example of analyzer 12. The use of a programmable microcomputer as analyzer 12 enables the processing details to be changed by changing the program. This thus increases the design flexibility of analyzer 12. Also, analyzer 12 may be implemented as hard logic. Analyzer 12 implemented as hard logic is effective in increasing the processing speed. Analyzer 12 may include a single element or may physically include a plurality of elements. When analyzer 12 includes a plurality of elements, each of control units described in the claims (scene recognizer, object recognizer, date information extractor, and location information extractor) may be implemented by different elements. In this case, it can be thought that these elements constitute one analyzer 12. Also, analyzer 12 and a member having a different function may be included in a single element. Stated differently, analyzer 12 may be physically configured in any manner so long as analyzer 12 is capable of image processing.

Also, the technology according to the present disclosure can be implemented not only as the image processing device and the image processing method, but also as a program that causes a computer to execute the steps included in the image processing method and as a non-transitory, computer-readable recording medium, such as a CD-ROM, on which such program is recorded.

The embodiment and variation thereof have been described above to illustrate the technology according to the present disclosure, for which the accompanying drawings and detailed descriptions have been provided. To illustrate the foregoing implementations, the elements described in the accompanying drawings and detailed descriptions can thus include not only the elements essential to solve the problem, but also elements not essential to solve the problem. Therefore, these elements should not be construed as being essential because of that they are illustrated in the accompanying drawings and detailed descriptions.

Also note that the foregoing embodiment and variation thereof are intended to illustrate the technology according to the present disclosure, and thus allow for various modifications, replacements, additions, omissions, and so forth made thereto within the scope of the claims and its equivalent scope.

### [Industrial Applicability]

The present disclosure is applicable to an image processing device that is capable of determining an event shown in a single image. More specifically, the disclosure is applicable to a computer device, a smartphone, etc. that obtain an image from a digital camera and determine an event.

### [Reference Signs List]

- 10: image processing device
- 11: obtainer
- 12: analyzer
- 12a: scene recognizer
- 12b: object recognizer
- 12c: date information extractor
- 12d: location information extractor
- 12e, 20: event determiner
- 13: database
- 13a-13j: table
- 21: candidate event identifier
- 22: likelihood adjuster
- 23: event outputter

## Claims

1. An image processing device comprising:
an obtainer that obtains a single image and meta information indicating additional information of the single image; and
an analyzer that performs an analysis of a meaning of the single image and the meta information obtained, determines an event shown in the single image, using the meaning obtained by the analysis, and outputs event information that identifies the event determined.

2. The image processing device according to claim 1,
wherein the analyzer includes:
a scene recognizer that recognizes, from the single image obtained, a scene shown by an entirety of the single image, and outputs scene information indicating the scene recognized;
at least one of (i) an object recognizer that recognizes, from the single image obtained, an object included in the single image, and outputs object information indicating the object recognized, (ii) a date information extractor that extracts, from the meta information obtained, date information included in the meta information and indicating a date on which the single image is generated, and outputs the date information extracted, or (iii) a location information extractor that extracts, from the meta information obtained, location information included in the meta information and indicating a location where the single image is generated, and outputs the location information extracted; and
an event determiner that performs an analysis of a meaning of at least one of the object information, the date information, or the location information obtained by the at least one of the object recognizer, the date information extractor, or the location information extractor, and determines the event shown in the single image, using event information and the meaning obtained by the analysis, the event information indicating a candidate event corresponding to the scene information outputted from the scene recognizer.

3. The image processing device according to claim 2, further comprising:
a database that stores a plurality of correspondences between at least one of the object information, the date information, or the location information and the meaning corresponding to the at least one of the object information, the date information, or the location information,
wherein the event determiner refers to the database to perform the analysis of the meaning of the at least one of the object information, the date information, or the location information obtained by the at least one of the object recognizer, the date information extractor, or the location information extractor.

4. The image processing device according to claim 3,
wherein the analyzer includes the object recognizer as the at least one of the object recognizer, the date information extractor, or the location information extractor,
the database stores event information and characteristic object information in correspondence with each other, the characteristic object information indicating a characteristic object used for the event indicated by the event information, and
the event determiner identifies, from the database, the characteristic object information corresponding to the object information obtained by the object recognizer, and obtains, as the meaning corresponding to the object information, the event information stored in the database in correspondence with the characteristic object information identified.

5. The image processing device according to claim 3,
wherein the analyzer includes the date information extractor as the at least one of the object recognizer, the date information extractor, or the location information extractor,
the database stores event information and event time information in correspondence with each other, the event time information indicating a time of year when the event indicated by the event information is conducted, and
the event determiner identifies, from the database, the event time information corresponding to the date information obtained by the date information extractor, and obtains, as the meaning corresponding to the date information, the event information stored in the database in correspondence with the event time information identified.

6. The image processing device according to claim 3,
wherein the analyzer includes the location information extractor as the at least one of the object recognizer, the date information extractor, or the location information extractor,
the database stores landmark information indicating a landmark and landmark position information in correspondence with each other, the landmark position information indicating a position of the landmark indicated by the landmark information, and
the event determiner identifies, from the database, the landmark position information corresponding to the location information obtained by the location information extractor, and obtains, as the meaning corresponding to the location information, the landmark information stored in the database in correspondence with the landmark position information identified.

7. The image processing device according to claim 3,
wherein the event determiner includes:
a candidate event identifier that identifies at least one candidate event and a reference event likelihood of each of the at least one candidate event, based on the scene information outputted from the scene recognizer, the reference event likelihood being a likelihood that the single image shows the candidate event;
a likelihood adjuster that adjusts the reference event likelihood of the at least one candidate event, using the meaning of the at least one of the object information, the date information, or the location information, to calculate an event likelihood of each of the at least one candidate event; and
an event outputter that outputs, as an event determination result, one of the at least one candidate event shown in the single image, based on the event likelihood of each of the at least one candidate event calculated by the likelihood adjuster.

8. The image processing device according to claim 7,
wherein the analyzer includes the object recognizer as the at least one of the object recognizer, the date information extractor, or the location information extractor,
the database stores event information and characteristic object information in correspondence with each other, the characteristic object information indicating a characteristic object used for the event indicated by the event information, and
the likelihood adjuster identifies, from the database, the characteristic object information corresponding to the object information obtained by the object recognizer, and depending on whether the event information stored in the database in correspondence with the characteristic object information identified is any one of the at least one candidate event identified by the candidate event identifier, adjusts the reference event likelihood corresponding to the candidate event by adding or subtracting a predetermined value to or from the reference event likelihood.

9. The image processing device according to claim 7,
wherein the analyzer includes the date information extractor as the at least one of the object recognizer, the date information extractor, or the location information extractor,
the database stores event information and event time information in correspondence with each other, the event time information indicating a time of year when the event indicated by the event information is conducted, and
the likelihood adjuster identifies, from the database, the event time information corresponding to the date information obtained by the date information extractor, and depending on whether the event information stored in the database in correspondence with the event time information identified is any one of the at least one candidate event identified by the candidate event identifier, adjusts the reference event likelihood corresponding to the candidate event by adding or subtracting a predetermined value to or from the reference event likelihood.

10. The image processing device according to claim 7,
wherein the analyzer includes the location information extractor as the at least one of the object recognizer, the date information extractor, or the location information extractor,
the database stores event information and event location information in correspondence with each other, the event location information indicating a location where the event indicated by the event information is conducted, and
the likelihood adjuster identifies, from the database, the event location information corresponding to the location information obtained by the location information extractor, and depending on whether the event information stored in the database in correspondence with the event location information identified is any one of the at least one candidate event identified by the candidate event identifier, adjusts the reference event likelihood corresponding to the candidate event by adding or subtracting a predetermined value to or from the reference event likelihood.

11. The image processing device according to any one of claims 7 to 10,
wherein the analyzer includes at least two of the object recognizer, the date information extractor, or the location information extractor,
the database stores at least one pair of the date information and the object information that are highly related, the location information and the object information that are highly related, or the location information and the date information that are highly related, and
the likelihood adjuster identifies whether the database stores a correspondence between the date information and the object information, between the location information and the object information, or between the location information and the date information obtained from the at least two of the object recognizer, the date information extractor, or the location information extractor, and adjusts the reference event likelihood by adding or subtracting a predetermined value to or from the reference event likelihood when the database stores the correspondence.

12. The image processing device according to any one of claims 7 to 11,
wherein the scene information includes a scene estimation result indicating the scene estimated by the scene recognizer and a scene estimation accuracy indicating an accuracy of estimating the scene, and
the candidate event identifier identifies the at least one candidate event from the scene estimation result included in the scene information outputted from the scene recognizer and identifies the reference event likelihood from the scene estimation accuracy included in the scene information outputted from the scene recognizer.

13. An image processing method comprising:
obtaining a single image and meta information indicating additional information of the single image; and
performing an analysis of a meaning of the single image and the meta information obtained, determining an event shown in the single image by use of the meaning obtained by the analysis, and outputting event information that identifies the event determined.
